# FASCICULE DE BREVET EUROPEEN

(11) **EP 3 742 040 B1**
(45) Date de publication et mention de la délivrance du brevet: **17.01.2024**
(21) Numéro de dépôt: 20172652.8
(22) Date de dépôt: 04.05.2020
(51) Int. Cl.: F17C 13/04

(54) **DISPOSITIF DE FOURNITURE DE FLUIDE SOUS PRESSION ET ENSEMBLE DE STOCKAGE(S) DE FLUIDE SOUS PRESSION COMPRENANT UN TEL DISPOSITIF**
LIEFERVORRICHTUNG FÜR EIN UNTER DRUCK STEHENDES FLUID, UND SPEICHEREINHEIT FÜR UNTER DRUCK STEHENDES FLUID, DIE EINE SOLCHE VORRICHTUNG UMFASST
DEVICE FOR DELIVERING PRESSURISED FLUID AND SET OF STORAGE UNIT(S) FOR PRESSURISED FLUID INCLUDING SUCH A DEVICE

(30) Priorité: 21.05.2019 FR 1905328
(43) Date de publication de la demande: 25.11.2020
(73) Titulaire: L'Air Liquide, société anonyme pour l'Étude et l'Exploitation des procédés Georges Claude, 75007 Paris (FR)
(72) Inventeur: FRENAL, Antoine, 78350 LES LOGES-EN-JOSAS (FR); CASAERT, Guillaume, 78350 LES LOGES-EN-JOSAS (FR); NILLE, Valérie, 78350 LES LOGES-EN-JOSAS (FR); GORRY, Sébastien, 78350 LES LOGES-EN-JOSAS (FR); FOGEN, René, 4780 SANKT VITH (BE); LAMIABLE, Morgan, 57940 METZERVISSE (FR)
(74) Mandataire: Air Liquide

(56) Documents cités:
- EP-A1- 3 161 371
- EP-A1- 3 273 139
- EP-A1- 3 299 694
- WO-A1-2018/015624

## Description

L'invention concerne un dispositif de fourniture de fluide sous pression ainsi qu'un ensemble de stockage(s) de fluide sous pression comprenant un tel dispositif. Un tel dispositif est connu de EP3161371 A1.

L'invention concerne plus particulièrement un dispositif de fourniture de fluide sous pression, notamment de gaz sous pression, comprenant un premier robinet abritant un circuit interne de fluide, le dispositif comportant un second robinet comprenant un circuit interne, le second robinet formant une entité physique distincte du premier robinet, le premier robinet et le second robinet comprenant des organes d'accrochages respectifs formant un système de connexion rapide amovible du second robinet sur le premier robinet, les circuits internes comprenant un ensemble de vanne(s) pour autoriser ou empêcher la circulation du fluide vers une sortie du dispositif lorsque le second robinet est accroché sur le premier robinet via le système de connexion rapide, le dispositif comprenant au moins un organe de commande mobile actionnable manuellement pour commander l'ensemble de vanne(s), l'organe de commande étant mobile entre une première position de repos dans laquelle la circulation de fluide vers la sortie est empêchée et une seconde position active dans laquelle la circulation de fluide vers la sortie est autorisée, le système de connexion rapide comprenant une pièce de connexion du second robinet sur le premier robinet, la pièce de connexion étant mobile entre une première position lorsque la connexion rapide n'est pas établie entre le second robinet et le premier robinet et une seconde position lorsque la connexion rapide est établie entre le second robinet et le premier robinet, le second robinet comprenant au moins un organe électrique et notamment, un contrôleur électronique et une batterie d'alimentation du au moins un organe électrique.

L'invention concerne en particulier un dispositif de fourniture de fluide modulaire comprenant un ou des organes électroniques (notamment au moins un organe de communication sans fil) alimentés électriquement par au moins une batterie. Ces dispositifs doivent en général être autonomes énergiquement. Ceci nécessite d'optimiser la consommation électrique pour préserver l'autonomie de la batterie et limiter les opérations de maintenance.

De préférence, ce type de dispositif doit être également en mesure de diagnostiquer et signaler des anomalie sou pannes.

L'invention s'applique en particulier à tout équipement électronique embarqué dans un système de fourniture de gaz (robinet nomade par exemple) connectable à raccord ou robinet d'une bouteille de fluide sous pression et autonome en énergie. Le robinet nomade possède par exemple plusieurs capteurs (capteur(s) de position des organes de raccordement mécanique entre les deux entités (robinets), capteur(s) de position d'un organe de commande de l'ouverture de vanne(s) (levier ou autre), capteur(s) de pression, ...). Le robinet nomade possède de préférence une ou plusieurs batteries, un contrôleur (carte électronique, microprocesseur, ou autre), une antenne de communication radiofréquence, une antenne NFC et un mode de fonctionnement différenciée avec notamment une mise en sommeil possible des organes électriques avec des conditions complètes ou partielles d'activation, des modes de communication différents (trames, fréquence et longue portée).

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce qu'il comporte un capteur position de la pièce de connexion et un capteur de position de l'organe de commande, lesdits capteurs étant reliés au contrôleur, le au moins organe électrique étant commutable entre deux états de fonctionnement distincts déterminés, le contrôleur étant configuré pour commuter le au moins un organe électrique entre les deux états de fonctionnement en fonction de la combinaison des mesures du capteur position de la pièce de connexion et du capteur de position de l'organe de commande. Par ailleurs, des modes de réalisation de l'invention peuvent comporter l'une ou plusieurs des caractéristiques suivantes :
- le au moins organe électrique est commutable entre deux états de fonctionnement ayant des niveaux de consommation électrique distincts, notamment entre un état actif et un état de veille,
- le au moins organe électrique comprend un organe de transmission de données sans fil commutable entre un état d'émission d'un signal et un état de non émission d'un signal et/ou entre des états distincts d'émission de signaux à des fréquences respectives différentes,
- lorsque le capteur position de la pièce de connexion détecte que la pièce de connexion est dans sa seconde position et que le capteur de position de l'organe de commande passe de sa seconde position vers sa première position, le contrôleur est configuré pour réaliser au moins l'un parmi : commander l'envoi à distance par l'organe de transmission d'un signal représentatif du changement de position de l'organe de commande, diminuer la fréquence d'envoi de signaux à distance par l'organe de transmission,
- le second robinet comprend un capteur de pression dans le circuit ledit capteur de pression générant un signal de mesure électrique et étant relié au contrôleur,
- lorsque le capteur position de la pièce de connexion détecte que la pièce de connexion est dans sa seconde position et que le capteur de position de l'organe de commande passe de sa seconde position vers sa première position, le contrôleur est configuré pour commander l'arrêt ou la diminution de la lecture de la mesure de pression du capteur de pression,
- le second robinet comprend un organe de lecture d'une radio-étiquette tel qu'une antenne de communication selon la technologie de communication à champ proche « NFC »,
- lorsque le capteur position de la pièce de connexion détecte un passage de la pièce de connexion de sa première position vers sa seconde position et que cette détection est suivie d'une détection par le capteur de position de l'organe de commande du passage de l'organe de commande de sa première position dans sa seconde position, le contrôleur est configuré pour activer l'organe de lecture d'une radio-étiquette et pour traiter le signal reçu,
- dans sa première position, la pièce de connexion assure un blocage de l'organe de commande dans sa première position de repos pour empêcher son déplacement vers sa seconde position active et, dans sa seconde position, la pièce de connexion ne bloque pas l'organe de commande dans sa première position de repos pour autoriser son déplacement vers sa seconde position active et, lorsque le capteur position de la pièce de connexion détecte que la pièce de connexion est dans sa première position et, que simultanément, le capteur de position de l'organe de commande est dans sa seconde position, le contrôleur est configuré pour générer un signal d'alerte visuel et/ou sonore et ou par voie électromagnétique,
- lorsque le capteur position de la pièce de connexion détecte que la pièce de connexion est dans sa première position et, que simultanément, le capteur de pression mesure une pression supérieure à un seuil ou délivre un signal de mesure de pression, le contrôleur est configuré pour générer un signal d'alerte visuel et/ou sonore et ou par voie électromagnétique,
- la pièce de connexion comprend ou est constituée d'un organe de verrouillage/déverrouillage de la liaison mécanique des organes d'accrochages du système de connexion rapide, notamment un manchon mobile en translation,
- le circuit interne du premier robinet s'étend entre une première extrémité amont destinée à être en communication avec une source de fluide sous pression et une extrémité aval, le circuit interne du premier robinet comprenant un clapet d'isolation permettant d'ouvrir ou de fermer le circuit interne, le circuit interne du second robinet comprenant une extrémité amont destinée à être en communication l'extrémité aval du circuit interne du premier robinet lorsque le second robinet est accroché sur le premier robinet et une extrémité aval formant la sortie destinée à être raccordée avec un appareil utilisateur du fluide, le second robinet comprenant un organe mobile d'actionnement du clapet d'isolation du premier robinet pour commander l'ouverture ou la fermeture de ce dernier, le déplacement dudit organe mobile d'actionnement étant commandé par l'organe de commande,
- le premier robinet comprend une extrémité de forme cylindrique s'étendant selon un axe longitudinal, le système de connexion rapide comprenant au moins une gorge ou nervure formée sur l'extrémité cylindrique du premier robinet et un système à griffes ou billes d'accrochage solidaire du second robinet et coopérant avec la au moins une gorge ou nervure formée sur l'extrémité cylindrique du premier robinet,
- dans sa première position l'organe de verrouillage/déverrouillage autorise un débattement relatif des organes d'accrochages formant le système de connexion rapide et dans sa seconde position l'organe de verrouillage/déverrouillage réduisant ou n'autorisant pas de débattement relatif des organes d'accrochages formant le système de connexion rapide,
- l'organe de verrouillage/déverrouillage est montée mobile en translation et/ou rotation sur le second robinet,
- l'organe de commande comprend un levier pivotant et/ou un bouton mobile en translation et/ou un volant rotatif,
- le blocage de l'organe de commande par la pièce de connexion est un blocage mécanique et/ou magnétique et/ou pneumatique direct ou via une pièce intermédiaire telle qu'une butée escamotable,
- dans sa seconde position active l'organe de commande assure un blocage de la pièce de connexion dans sa second position, pour empêcher la séparation entre le second robinet et le premier robinet, et dans sa première position de repos l'organe de commande ne bloquant pas la pièce de connexion dans sa second position, pour permettre son déplacement vers sa première position et ainsi autoriser la séparation entre le second robinet et le premier robinet,
- le blocage de la pièce de connexion par l'organe de commande est un blocage mécanique et/ou magnétique et/ou pneumatique direct ou via une pièce intermédiaire telle qu'une butée escamotable,
- dans sa seconde position active l'organe de commande assure un blocage de l'organe de verrouillage/déverrouillage dans sa second position, pour empêcher la séparation entre le second robinet et le premier robinet, et dans sa première position de repos l'organe de commande ne bloquant pas l'organe de verrouillage/déverrouillage dans sa seconde position, pour permettre son déplacement vers sa première position et ainsi autoriser la séparation entre le second robinet et le premier robinet,
- le blocage est un blocage mécanique et/ou magnétique et/ou pneumatique direct ou via une pièce intermédiaire telle qu'une butée escamotable.

L'invention peut concerner également un ensemble de stockage(s) de fluide sous pression comprenant un dispositif conforme à l'une quelconque des caractéristiques ci-dessus ou ci-dessous. L'invention peut concerner également tout dispositif ou procédé alternatif comprenant toute combinaison des caractéristiques ci-dessus ou ci-dessous dans le cadre des revendications. D'autres particularités et avantages apparaîtront à la lecture de la description ci-après, faite en référence aux figures dans lesquelles :
[Fig. 1] représente une vue en coupe, schématique et partielle, illustrant la structure mécanique d'un exemple de réalisation d'un dispositif de fourniture de fluide dans un état déconnecté ou séparé,
[Fig. 2] représente une vue similaire à celle de la [Fig. 1] dans un état accroché/connecté (verrouillé) et illustrant les composants électroniques du dispositif,
[Fig. 3] représente une vue schématique et partielle, illustrant sous forme de logigramme différents modes d'utilisation possibles du dispositif.

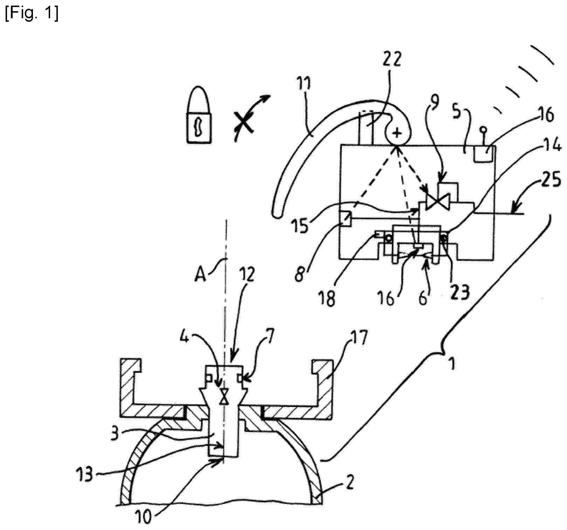

Comme illustré à la [Fig. 1] le dispositif 1 de fourniture de fluide sous pression, notamment de gaz sous pression, comprend un premier robinet 3 monté dans l'orifice d'un réservoir 2 et entouré d'un chapeau 17 de protection.

Le premier robinet 3 abrite un circuit 13 interne de fluide muni d'au moins d'un organe 4 d'isolation permettant d'ouvrir ou de fermer le circuit 13 interne. L'organe 4 d'isolement est par exemple un clapet d'isolation.

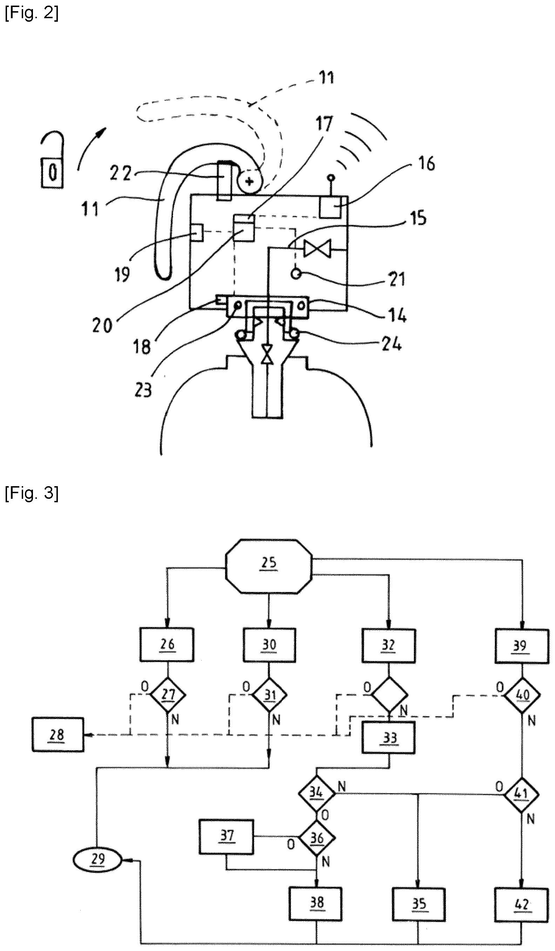

Le dispositif 1 comprend un second robinet 5 formant une entité physique distincte (séparable) du premier robinet 3 (et en position déconnectée à la [Fig. 1] et en position connectée/accroché à la [Fig. 2].

Le second robinet 5 est muni d'un circuit 15 interne de fluide comprenant une première extrémité amont destinée à venir se raccorder fluidiquement à une extrémité aval 12 du circuit 13 interne du premier 3 robinet. Les deux robinets 3, 5 sont configurés pour mettre en communication leurs circuits internes 13, 15 lorsque le second robinet 5 est correctement accroché sur le premier robinet 3 via le système de connexion rapide.

Le circuit 15 interne du second robinet 5 peut comprendre par exemple au moins un organe 9 de contrôle du flux de fluide (par exemple une vanne et/ou un détendeur fixe ou réglable et/ou un régulateur de débit). Le second 5 robinet comprend de préférence également un organe 16 mobile d'actionnement de l'organe 4 d'isolation du premier robinet 3 pour commander l'ouverture ou la fermeture de ce dernier. Par exemple, l'organe 16 mobile d'actionnement comprend un pousse-clapet mobile dont le déplacement est commandé par un organe 11 de commande manuel porté par le second 5 robinet. L'organe 11 de commande comprend un levier 11 dans cet exemple mais pourrait comprendre un bouton poussoir, un volant ou tout autre organe approprié. Le levier 11 peut commander le cas échéant l'organe 9 de contrôle du flux de fluide.

Le premier 3 robinet et le second 5 robinet comprenant des organes 6, 7 d'accrochages respectifs formant un système de connexion/accrochage rapide mâle/femelle amovible du second robinet 5 sur le premier 3 robinet.

Par exemple, le premier 3 robinet comprend une extrémité terminale de forme cylindrique s'étendant selon un axe A longitudinal central sur laquelle se raccorde le second robinet 5. Le système de connexion rapide peut comprendre au moins une gorge 7 ou nervure formée sur l'extrémité cylindrique du premier robinet 3 et un système a griffes 6, billes (ou tout élément d'accrochage équivalent approprié) solidaire du second robinet 5.

Le ou les éléments 6 d'accrochage du second robinet 5 sont de préférence mobiles et peuvent être verrouillés/déverrouillés par exemple un organe 14 de verrouillage mobile sur le second robinet 5. Le ou les éléments 6 d'accrochage du second robinet 5 coopèrent avec le au moins une gorge ou nervure 7 formée sur l'extrémité cylindrique du premier robinet 3.

Le levier 11 est déplaçable entre une première position de repos dans laquelle la circulation de fluide vers la sortie 25 est empêchée (cf. par exemple la position basse du levier 11 de la [Fig. 1]) et une seconde position active dans laquelle la circulation de fluide vers la sortie 25 est autorisée (cf. position la position relevée en pointillés de [Fig. 1]).

Le système de connexion rapide comprend une pièce 14 de connexion du second robinet 5 sur le premier 3 robinet, par exemple un organe 14 de verrouillage/déverrouillage de la connexion rapide. Cette pièce 14 de connexion est mobile entre une première position lorsque la connexion rapide n'est pas établie entre le second robinet 5 et le premier robinet (cf. [Fig. 1]) et une seconde position lorsque la connexion rapide est établie entre le second robinet 5 et le premier robinet 3 (cf. [Fig. 2]).

De préférence, cette pièce 14 de connexion est un organe 14 de verrouillage/déverrouillage de la connexion rapide et cet organe 14 de verrouillage/déverrouillage permet ou non, selon sa position, le mouvement des organes 6 d'accrochage mobiles (et donc une connexion/déconnexion mécanique). Dans sa seconde position, l'organe 14 de verrouillage/déverrouillage ne permet pas le mouvement des organes 6 d'accrochage mobiles (blocage/verrouillage en position de connexion mécanique).

La pièce 14 de connexion est donc un indicateur entre d'une part une connexion correcte (par exemple verrouillée) et, d'autre part, une absence de connexion ou une connexion incorrect ou incomplète (pas de connexion mécanique ou une connexion incomplète non verrouillée).

De préférence, dans sa première position, l'organe 14 de verrouillage/déverrouillage connexion assure un blocage du levier 11 de commande dans sa première position de repos, pour empêcher son déplacement vers sa seconde position active (cf. [Fig. 1] ceci est symbolisé par un cadenas fermé et une flèche de rotation du levier barrée).

Dans sa seconde position, l'organe 14 de verrouillage/déverrouillage ne bloque pas le levier 11 de commande dans sa première position de repos pour autoriser son déplacement vers sa seconde position active (cf. [Fig. 2] où ce déverrouillage est symbolisé par un cadenas ouvert et une flèche de rotation du levier non barrée).

C'est-à-dire que si l'organe 14 de verrouillage/déverrouillage n'est pas dans une position qui correspond à un accrochage correct et verrouillé des deux robinets 3, 5, cet organe 14 de verrouillage interdit directement ou indirectement au levier 11 de pouvoir passer de vers sa position active (rotation bloquée par exemple).

L'organe 14 de verrouillage/déverrouillage de la liaison mécanique des organes 6, 7 d'accrochages du système de connexion rapide peut comprendre un manchon ou une bague mobile en translation sur le second robinet 5. Cet organe 14 de verrouillage est par exemple mobile entre une première position de déverrouillage (position haute cf. [Fig. 1] et une seconde position de verrouillage (position basse cf. [Fig. 2]).

Dans la première position, l'organe 14 de verrouillage/déverrouillage permet par exemple le débattement/déplacement des organes d'accrochage 6 mobiles (second robinet 5 séparé ou séparable du premier robinet 3.

Dans la seconde position de verrouillage, l'organe 14 de verrouillage/déverrouillage empêche par exemple le débattement/déplacement des organes d'accrochage 6 mobiles (second robinet 5 accroché correctement de façon complète sur le premier robinet 3).

Le blocage du levier 11 de commande par l'organe de verrouillage/déverrouillage 14 est de préférence un blocage mécanique direct ou via une pièce intermédiaire telle qu'une butée escamotable (cf. la références 22). Bien entendu ce blocage pourrait être également ou alternativement magnétique et/ou pneumatique par exemple.

Par exemple, le blocage du levier 11 par l'organe 14 de de verrouillage/déverrouillage est un blocage mécanique assuré par une pièce intermédiaire du dispositif ayant une extrémité coopérant avec une portion du levier 11 et une extrémité coopérant avec l'organe 14 de verrouillage/déverrouillage. La pièce intermédiaire 22 formant ou non une butée mécanique pour le levier 11 selon la position de l'organe 14 de verrouillage/déverrouillage.

Dans les exemples décrits ci-dessus la pièce 14 de connexion qui bloque ou ne bloque pas le levier 11 est un organe 14 de verrouillage de la connexion rapide. Bien entendu, d'autres variantes de réalisation sont possibles et notamment cette fonction de blocage du levier 11 lorsque le second robinet 5 n'est pas correctement accroché sur le premier robinet 3 pourrait être assurée de la même façon (directement ou indirectement) par une autre pièce mobile du système de connexion rapide (par exemple par une griffe ou crochet ou bille ou pièce intermédiaire de transmission de mouvement de la connexion rapide).

En outre ce mécanisme (ou un autre mécanisme) de blocage du levier 11 interdit de préférence la séparation des deux robinets 3, 5 (par exemple via une interdiction de déplacement de l'organe 14 de verrouillage/déverrouillage vers sa première position de déverrouillage) tant que le levier 11 n'est pas dans sa première position de repos.

Par exemple, dans sa seconde position active, le levier 11 de commande assure un blocage de l'organe 14 de verrouillage/déverrouillage dans sa seconde position, pour empêcher la séparation entre le second robinet 5 et le premier 3 robinet.

De plus, dans sa première position de repos, le levier 11 ne bloque pas l'organe 14 de verrouillage/déverrouillage dans sa seconde position, pour permettre son déplacement vers sa première position et ainsi autoriser la séparation entre le second robinet 5 et le premier 3 robinet.

Ainsi, cette architecture interdit la déconnexion du second robinet 5 par rapport au premier robinet 3 si le levier 11 est dans sa position qui commande l'ouverture du ou des circuits internes. Ce blocage est de préférence réalisé via l'organe 14 de verrouillage/déverrouillage.

Ce blocage de l'organe 14 de verrouillage/déverrouillage par le levier 11 de commande peut être directe ou indirect et de préférence mécanique mais pourrait être magnétique et/ou pneumatique ou autre.

Comme illustré, le second robinet 5 comprend au moins un organe 16, 23 électrique et notamment, un contrôleur 20 électronique et une batterie 17 d'alimentation du au moins un organe 16, 23 électrique.

Par exemple le second robinet 5 comprend un organe 16 de transmission de données sans fil tel qu'une antenne de communication radiofréquence, par exemple à longue portée et basse consommation (et/ou tout autre mode de communication, RFID, Bluetooth, GSM...) .

Le second robinet 5 comporte également un capteur 18 position de la pièce 14 de connexion et un capteur 19 de position de l'organe 11 de commande.

Ces capteurs 18, 19 (magnétiques et/ou électromécaniques et/ou électriques et/ou mécaniques) sont reliés au contrôleur 20 et génèrent un signal électrique transmis au contrôleur 20. En particulier, au moins l'un de ces capteurs 18, 19 peut être un capteur bistable détectant deux positions ou deux états distincts de la pièce mobile concernée (organe 11 ou pièce 14) et générant un signal (électrique ou magnétique ou autre) en cas de changement de position. Par exemple chaque capteurs 18, 19 peut comprendre un interrupteur mobile avec la pièce 11 ou 14 qui le porte (ou un élément détectable mobile) et qui coopère avec deux détecteurs fixes situés sur le corps du second robinet 5 et correspondant aux deux positions. En variante élément sensible est mobile avec la pièce et coopère, selon sa position, avec deux éléments détectables situés sur le corps du second robinet 5 et correspondant aux deux positions.

Le second robinet 5 comprend également de préférence un organe 23 de lecture d'une radio-étiquette tel qu'une antenne de communication selon la technologie de communication à champ proche « NFC ». Cette organe 21 de lecture (et éventuellement d'écriture) est configuré pour communiquer sans fil avec un organe 24 conjugué (par exemple une antenne communiquant selon la même technologie) qui est située sur le premier robinet 3. Par exemple l'antenne 24 du premier robinet peut être lue par l'antenne 23 du second robinet pour identifier la bouteille 2 correspondante et lire (et éventuellement écrire) des informations pertinentes à ce sujet...

Comme illustré, de préférence le second robinet 5 comporte en outre un capteur 21 de mesure de la pression dans le circuit 15. Ce capteur 21 de pression est configuré pour générer un signal de mesure électrique et est relié au contrôleur 20.

Au moins l'un des organes électriques du second robinet 5 et notamment l'antenne 16 de communication est commutable entre deux états de fonctionnement distincts déterminés.

De plus, le contrôleur 20 est configuré pour commuter le ou les moins un organe électrique (y compris lui-même) entre les deux états de fonctionnement en fonction de la combinaison des mesures du capteur 18 position de la pièce 14 de connexion et du capteur 19 de position de l'organe 11 de commande. C'est-à-dire que selon les positions relatives (et/ou leurs déplacements respectifs séquentiels) de l'organe 11 de commande et de la pièce 14 de connexion, le contrôleur 20 adapte le fonctionnement et notamment la consommation électrique des organes électriques.

Par exemple, tout ou partie des organes électrique sont commutables entre deux états de fonctionnement ayant des niveaux de consommation électrique distincts, notamment entre un état actif et un état de veille (ou d'activité relativement plus réduite) .

Par exemple, l'organe 16 de transmission de données sans fil est commutable entre un état d'émission d'un signal et un état de non émission d'un signal et/ou entre des états distincts d'émission de signaux à des fréquences respectives différentes (ou des émissions de données différentes).

Ainsi, par exemple, lorsque le capteur 18 position de la pièce 14 de connexion détecte que la pièce 14 de connexion est dans sa seconde position (robinet 3, 5 raccordés) et que le capteur 19 de position de l'organe 11 de commande passe de sa seconde position vers sa première position (circuit fluidique fermé), le contrôleur 20 peut être configuré pour réaliser au moins l'un parmi : commander l'envoi à distance par l'organe 16 de transmission d'un signal représentatif du changement de position de l'organe 11 de commande et/ou diminuer la fréquence d'envoi de signaux à distance par l'organe 16 de transmission.

De même, lorsque le capteur 18 de position de la pièce 14 de connexion détecte que la pièce 14 de connexion est dans sa seconde position (robinet 3, 5 raccordés) et que le capteur 19 de position de l'organe 11 de commande passe de sa seconde position vers sa première position (fermeture du circuit fluidique), le contrôleur 20 peut être configuré pour commander l'arrêt ou la diminution de la lecture de la mesure de pression du capteur 21 de pression et/ou diminuer la fréquence de mesure de ce capteur 21.

Lorsque le capteur 18 position de la pièce 14 de connexion détecte un passage de la pièce de connexion 14 de sa première position vers sa seconde position (robinets 3, 5 raccordés) et que cette détection est suivie d'une détection par le capteur 19 de position de l'organe 11 de commande du passage de l'organe de commande de sa première position dans sa seconde position (ouverture du circuit), le contrôleur 20 peut être configuré pour activer, en réponse, l'organe 23 de lecture d'une radio-étiquette et pour traiter le signal reçu par cet organe 23 de lecture.

Dans le cas où la pièce 14 de connexion assure un blocage de l'organe 11 de commande dans sa première position de repos (cf. ci-dessus et inversement lorsque la position active du levier 11 bloque la séparation des robinets 3, 5 raccordés), le contrôleur 20 peut être configuré pour détecter une anomalie de fonctionnement.

Ainsi, lorsque le capteur 18 de position de la pièce 14 de connexion détecte que la pièce 14 de connexion est dans sa première position (robinets 3, 5 non raccordés) et, que simultanément, le capteur 19 de position de l'organe 11 de commande est dans sa seconde position (ouverture du circuit fluidique), le contrôleur 20 peut être configuré pour générer un signal d'alerte visuel et/ou sonore et ou par voie électromagnétique.

De même, lorsque le capteur 18 de position de la pièce 14 de connexion détecte que la pièce 14 de connexion est dans sa première position (robinets 3, 5 non raccordés) et, que simultanément, le capteur 21 de pression mesure une pression supérieure à un seuil ou délivre un signal de mesure de pression, le contrôleur 20 peut être configuré pour générer un signal d'alerte visuel et/ou sonore et ou par voie électromagnétique. Ces modes de fonctionnement et d'autres possibilités sont illustrés à la [Fig. 3].

Le contrôleur 20 peut notamment être configurer pour disposer le ou les organes électriques (y compris lui-même) dans un état dit « de sommeil profond » dans lequel l'activité et la consommation électrique sont réduites au minimum (pas de communication à distance via l'organe 16 notamment) . Ce mode peut être communiqué au contrôleur 20 du second robinet 5 via un des organe 16, 23 de communication par exemple. Il peut être prévu notamment en vue d'un stockage long sans utilisation, par exemple en sortie d'usine de production du dispositif.

Partant de ce mode ou étape 25 de sommeil profond, lorsque le capteur 18 position de la pièce 14 de connexion détecte que la pièce 14 de connexion passe dans sa seconde position (étape 26 - raccordement des robinets 3, 5), le contrôleur 20 peut vérifier ensuite dans une étape 27 suivante ou simultanée si le capteur 19 de position de l'organe 11 de commande était ou est dans sa seconde position (active). Si oui (0) un signal d'erreur peut être généré (étape 28) car cela contredit la sécurité qui interdit de raccorder deux robinets 3, 5 alors que l'organe 11 de commande est en position active. Sinon (N), une étape 29 d'attente de fonctionnement normale est atteinte.

Si en revanche le capteur 18 position de la pièce 14 de connexion détecte que la pièce 14 de connexion passe dans sa première position (séparation des robinets 3, 5) (étape 30), le contrôleur 20 peut vérifier dans une étape 31 suivante ou simultanée si le capteur 19 de position de l'organe 11 de commande était ou est dans sa seconde position (active). Si oui (0) un signal d'erreur peut être généré (étape 28) car cela contredit la sécurité qui interdit de séparer deux robinets 3, 5 alors que l'organe 11 de commande est en position active. Sinon, une étape 29 d'attente de fonctionnement normale est atteinte.

Si en revanche le capteur 19 de position de l'organe 11 de commande détecte que l'organe 11 de commande passe dans sa seconde position active (étape 32), le contrôleur 20 peut vérifier dans une étape 33 suivante ou simultanée (via le capteur 18) si la pièce 14 de connexion est dans sa première position (robinet 3, 5 non raccordés).

Si oui (0) un signal d'erreur peut être généré (étape 28) car cela contredit la sécurité qui interdit d'ouvrier le circuit alors que les deux robinets 3, 5 ne sont pas raccordés. Sinon (N), dans une étape 33 suivante le contrôleur 20 peut commander au moins l'un parmi : l'activation (lecture) de l'organe 23 de lecture d'une radio-étiquette, l'activation (mesure des différents capteurs notamment de pression 21. Ensuite le contrôleur 20 peut vérifier s'il reçoit une information de l'organe 23 de lecture d'une radio-étiquette (étape 34).

Sinon (N) le contrôleur peut commuter vers un mode de fonctionnement (étape 35) par exemple pendant lequel l'organe (16) de transmission de données n'envoie pas ou très peu de messages à distance.

Si oui (0), le contrôleur peut traiter les informations reçues et déterminer si le second robinet 5 s'est raccordé ou non à une nouvelle bouteille (c'est-à-dire s'il a reçu un autre identifiant que celui lu précédemment) (étape 36).

Si oui (0) le contrôleur 20 peut commuter vers un mode de fonctionnement (étape 37) par exemple pendant lequel l'organe (16) de transmission de données envoie un message à distance pour signaler notamment ce changement de bouteille.

Si non (N) (et éventuellement après l'étape 37), le contrôleur 20 peut commuter vers un mode de fonctionnement (étape 38) dans lequel le second robinet 5 est actif (activation des mesures du ou des capteurs, traitement des informations, signalisation lumineuse...

Si en revanche le capteur 19 de position de l'organe 11 de commande détecte que l'organe 11 de commande passe dans sa première position inactive (étape 39), le contrôleur 20 peut vérifier dans une étape 40 suivante ou simultanée (via le capteur 18) si la pièce 14 de connexion est ou était dans sa première position (robinet 3, 5 non raccordés).

Si oui (0) un signal d'erreur peut être généré (étape 28) car cela contredit la sécurité qui interdit de manipuler le levier 11 vers sa position active alors que les deux robinets 3, 5 ne sont pas raccordés.

Sinon (N), dans une étape 41 suivante le contrôleur 20 peut vérifier si oui ou non le robinet était déjà dans un mode de veille.

Si oui (0) le contrôleur peut commuter vers un mode de fonctionnement (étape 35) par exemple pendant lequel l'organe (16) de transmission de données n'envoie pas ou très peu de messages à distance.

Si non (N) le contrôleur peut commuter vers un mode de fonctionnement inactif (étape 42) par exemple pendant lequel l'organe (16) de transmission de données envoie cette information de changement d'état à distance.

A l'issue des étape 35, 38 et 42 le contrôleur peut commuter dans une étape 29 d'attente de fonctionnement normale déterminée.

Ce ou ces modes de fonctionnement permettent d'optimiser le fonctionnement énergétique du dispositif en déterminant notamment le moment le plus opportun pour réaliser une activation et lecture via l'organe 23 de lecture.

Les capteurs et la logique électronique 20 permettent de détecter et de signaler des disfonctionnements.

En effet, la présence de différents capteurs 18, 19 s'activant normalement dans un ordre ou une logique donnée (pièce de connexion 14 et organe 11 de commande) permettent de signaler par exemple à une plateforme de communication distante des incohérences entre la mécanique et l'électronique et par conséquent des risques de panne.

L'envoi de ces informations ou signaux peuvent être analysés par une plateforme d'internet des objets (« IOT »).

En réponse à une alerte un signal par exemple lumineux peut être activé sur le dispositif, notamment sur le second robinet 5 pourvu à cet effet d'un avertisseur.

## Revendications

1. Dispositif de fourniture de fluide sous pression, notamment de gaz sous pression, comprenant un premier robinet (3) abritant un circuit (13) interne de fluide, le dispositif (1) comportant un second robinet (5) comprenant un circuit (15) interne, le second robinet (5) formant une entité physique distincte du premier robinet (3), le premier (3) robinet et le second (5) robinet comprenant des organes (6, 7) d'accrochages respectifs formant un système de connexion rapide amovible du second robinet (5) sur le premier (3) robinet, les circuits (13, 15) internes comprenant un ensemble de vanne(s) (4, 9) pour autoriser ou empêcher la circulation du fluide vers une sortie (25) du dispositif lorsque le second robinet (5) est accroché sur le premier robinet (3) via le système de connexion rapide, le dispositif (1) comprenant au moins un organe (11) de commande mobile actionnable manuellement pour commander l'ensemble de vanne(s), l'organe (11) de commande étant mobile entre une première position de repos dans laquelle la circulation de fluide vers la sortie (25) est empêchée et une seconde position active dans laquelle la circulation de fluide vers la sortie (25) est autorisée, le système de connexion rapide comprenant une pièce (14) de connexion du second robinet (5) sur le premier (3) robinet, la pièce (14) de connexion étant mobile entre une première position lorsque la connexion rapide n'est pas établie entre le second robinet (5) et le premier (3) robinet et une seconde position lorsque la connexion rapide est établie entre le second robinet (5) et le premier robinet (3), le second robinet comprenant au moins un organe (16, 17) électrique et notamment, un contrôleur (20) électronique et une batterie (17) d'alimentation du au moins un organe (16, 17) électrique, et un capteur (18) position de la pièce (14) de connexion relié au contrôleur (20), le au moins organe (16, 17) électrique étant commutable entre deux états de fonctionnement distincts déterminés, le contrôleur (20) étant configuré pour commuter le au moins un organe (16, 17) électrique entre les deux états de fonctionnement le dispositif étant **caractérisé en ce qu'**il comporte un capteur (19) de position de l'organe (11) de commande relié au contrôleur (20), , le contrôleur (20) étant configuré pour commuter le au moins un organe (16, 17) électrique en fonction de la combinaison des mesures du capteur (18) position de la pièce (14) de connexion et du capteur (19) de position de l'organe (11) de commande et **en ce que**, dans sa première position, la pièce (14) de connexion assure un blocage de l'organe (11) de commande dans sa première position de repos pour empêcher son déplacement vers sa seconde position active et **en ce que**, dans sa seconde position, la pièce (14) de connexion ne bloque pas l'organe (11) de commande dans sa première position de repos pour autoriser son déplacement vers sa seconde position active et **en ce que**, lorsque le capteur (18) position de la pièce (14) de connexion détecte que la pièce (14) de connexion est dans sa première position et, que simultanément, le capteur (19) de position de l'organe (11) de commande est dans sa seconde position, le contrôleur (20) est configuré pour générer un signal d'alerte visuel et/ou sonore et ou par voie électromagnétique.

2. Dispositif selon la revendication 1, **caractérisé en ce que** le au moins organe (16, 17) électrique est commutable entre deux états de fonctionnement ayant des niveaux de consommation électrique distincts, notamment entre un état actif et un état de veille.

3. Dispositif selon la revendication 1 ou 2, **caractérisé en ce que** le au moins organe (16, 17) électrique comprend un organe (16) de transmission de données sans fil (16) commutable entre un état d'émission d'un signal et un état de non émission d'un signal et/ou entre des états distincts d'émission de signaux à des fréquences respectives différentes.

4. Dispositif selon la revendication 3, **caractérisé en ce que**, lorsque le capteur (18) position de la pièce (14) de connexion détecte que la pièce (14) de connexion est dans sa seconde position et que le capteur (19) de position de l'organe (11) de commande passe de sa seconde position vers sa première position, le contrôleur (20) est configuré pour réaliser au moins l'un parmi : commander l'envoi à distance par l'organe (16) de transmission d'un signal représentatif du changement de position de l'organe (11) de commande, diminuer la fréquence d'envoi de signaux à distance par l'organe (16) de transmission.

5. Dispositif selon l'une quelconque des revendications 1 à 4, **caractérisé en ce que** le second robinet (5) comprend un capteur (21) de pression dans le circuit (15) ledit capteur (21) de pression générant un signal de mesure électrique et étant relié au contrôleur (20).

6. Dispositif selon la revendication 5 combinée à la revendication 4, **caractérisé en ce que** lorsque le capteur (18) position de la pièce (14) de connexion détecte que la pièce (14) de connexion est dans sa seconde position et que le capteur (19) de position de l'organe (11) de commande passe de sa seconde position vers sa première position, le contrôleur (20) est configuré pour commander l'arrêt ou la diminution de la lecture de la mesure de pression du capteur (21) de pression.

7. Dispositif selon l'une quelconque des revendications 1 à 6, **caractérisé en ce que** le second robinet (5) comprend un organe (23) de lecture d'une radio-étiquette tel qu'une antenne de communication selon la technologie de communication à champ proche « NFC ».

8. Dispositif selon la revendication 7, **caractérisé en ce que** lorsque le capteur (18) position de la pièce (14) de connexion détecte un passage de la pièce de connexion (14) de sa première position vers sa seconde position et que cette détection est suivie d'une détection par le capteur (19) de position de l'organe (11) de commande du passage de l'organe (11) de commande de sa première position dans sa seconde position, le contrôleur (20) est configuré pour activer l'organe (23) de lecture d'une radio-étiquette et pour traiter le signal reçu.

9. Dispositif selon l'une quelconque la revendication 5 ou 6, **caractérisé en ce que**, lorsque le capteur (18) position de la pièce (14) de connexion détecte que la pièce (14) de connexion est dans sa première position et, que simultanément, le capteur (21) de pression mesure une pression supérieure à un seuil ou délivre un signal de mesure de pression, le contrôleur (20) est configuré pour générer un signal d'alerte visuel et/ou sonore et ou par voie électromagnétique.

10. Dispositif selon l'une quelconque des revendications 1 à 9, **caractérisé en ce que** la pièce (14) de connexion comprend ou est constituée d'un organe (14) de verrouillage/déverrouillage de la liaison mécanique des organes (6, 7) d'accrochages du système de connexion rapide, notamment un manchon mobile en translation.

11. Ensemble de stockage(s) de fluide sous pression comprenant un dispositif conforme à l'une quelconque des revendications 1 à 10.

## Patentansprüche

1. Vorrichtung zum Liefern eines unter Druck stehenden Fluids, insbesondere eines unter Druck stehenden Gases, die einen ersten Hahn (3) enthält, der einen inneren Fluidschaltkreis (13) schützt, wobei die Vorrichtung (1) einen zweiten Hahn (5) aufweist, der einen inneren Schaltkreis (15) enthält, wobei der zweite Hahn (5) eine vom ersten Hahn (3) getrennte physikalische Entität bildet, wobei der erste Hahn (3) und der zweite Hahn (5) Befestigungselemente (6, 7) enthalten, die ein entfernbares Schnellverbindungssystem des zweiten Hahns (5) mit dem ersten Hahn (3) bilden, wobei die inneren Schaltkreise (13, 15) eine Einheit von Ventilen (4, 9) enthalten, um die Strömung des Fluids zu einem Ausgang (25) der Vorrichtung zu erlauben oder zu verhindern, wenn der zweite Hahn (5) über das Schnellverbindungssystem am ersten Hahn (3) befestigt ist, wobei die Vorrichtung (1) mindestens ein mobiles Steuerelement (11) enthält, das manuell betätigbar ist, um die Einheit von Ventilen zu steuern, wobei das Steuerelement (11) zwischen einer ersten Ruhestellung, in der die Fluidströmung zum Ausgang (25) verhindert wird, und einer zweiten aktiven Stellung mobil ist, in der die Fluidströmung zum Ausgang (25) erlaubt ist, wobei das Schnellverbindungsystem ein Verbindungsbauteil (14) des zweiten Hahns (5) mit dem ersten Hahn (3) enthält, wobei das Verbindungsbauteil (14) zwischen einer ersten Stellung, wenn die Schnellverbindung zwischen dem zweiten Hahn (5) und dem ersten Hahn (3) nicht aufgebaut ist, und einer zweiten Stellung mobil ist, wenn die Schnellverbindung zwischen dem zweiten Hahn (5) und dem ersten Hahn (3) aufgebaut ist, wobei der zweite Hahn mindestens ein elektrisches Element (16, 17) und insbesondere ein elektronisches Steuergerät (20) und eine Versorgungsbatterie (17) des mindestens einen elektrischen Elements (16, 17) und einen Positionssensor (18) des mit dem Steuergerät (20) verbundenen Verbindungsbauteils (14) enthält, wobei das mindestens eine elektrische Element (16, 17) zwischen zwei bestimmten unterschiedlichen Betriebszuständen umschaltbar ist, wobei das Steuergerät (20) konfiguriert ist, das mindestens eine elektrische Element (16, 17) zwischen den zwei Betriebszuständen umzuschalten, wobei die Vorrichtung **dadurch gekennzeichnet ist, dass** sie einen mit dem Steuergerät (20) verbundenen Positionssensor (19) des Steuerelements (11) aufweist, wobei das Steuergerät (20) konfiguriert ist, das mindestens eine elektrische Element (16, 17) abhängig von der Kombination der Messungen des Positionssensors (18) des Verbindungsbauteils (14) und des Positionssensors (19) des Steuerelements (11) umzuschalten, und dass das Verbindungsbauteil (14) in seiner ersten Stellung eine Blockierung des Steuerelements (11) in seiner ersten Ruhestellung gewährleistet, um seine Verschiebung in seine zweite aktive Stellung zu verhindern, und dass das Verbindungsbauteil (14) in seiner zweiten Stellung nicht das Steuerelement (11) in seiner ersten Ruhestellung blockiert, um seine Verschiebung in seine zweite aktive Stellung zu erlauben, und dass, wenn der Positionssensor (18) des Verbindungsbauteils (14) erkennt, dass das Verbindungsbauteil (14) in seiner ersten Stellung und gleichzeitig der Positionssensor (19) des Steuerelements (11) in seiner zweiten Stellung ist, das Steuergerät (20) konfiguriert ist, ein optisches und/oder akustisches Warnsignal und/oder auf elektromagnetischem Weg zu erzeugen.

2. Vorrichtung nach Anspruch 1, **dadurch gekennzeichnet, dass** das mindestens eine elektrische Element (16, 17) zwischen zwei Betriebszuständen umschaltbar ist, die unterschiedliche Stromverbrauchspegel haben, insbesondere zwischen einem aktiven Zustand und einem Standby-Zustand.

3. Vorrichtung nach Anspruch 1 oder 2, **dadurch gekennzeichnet, dass** das mindestens eine elektrische Element (16, 17) ein Element (16) zur drahtlosen Datenübertragung (16) enthält, das zwischen einem Zustand des Sendens eines Signals und einem Zustand des Nichtsendens eines Signals und/oder zwischen unterschiedlichen Signalsendezuständen auf verschiedenen Frequenzen umschaltbar ist.

4. Vorrichtung nach Anspruch 3, **dadurch gekennzeichnet, dass**, wenn der Positionssensor (18) des Verbindungsbauteils (14) erkennt, dass das Verbindungsbauteil (14) in seiner zweiten Stellung ist, und dass der Positionssensor (19) des Steuerelements (11) von seiner zweiten Stellung in seine erste Stellung übergeht, das Steuergerät (20) konfiguriert ist, mindestens eines auszuführen unter: Fernsenden eines für die Stellungsänderung des Steuerelements (11) repräsentativen Signals durch das Übertragungselement (16), Verringern der Frequenz des Fernsendens von Signalen durch das Übertragungselement (16).

5. Vorrichtung nach einem der Ansprüche 1 bis 4, **dadurch gekennzeichnet, dass** der zweite Hahn (5) einen Drucksensor (21) im Schaltkreis (15) enthält, wobei der Drucksensor (21) ein elektrisches Messsignal erzeugt und mit dem Steuergerät (20) verbunden ist.

6. Vorrichtung nach Anspruch 5 kombiniert mit Anspruch 4, **dadurch gekennzeichnet, dass**, wenn der Positionssensor (18) des Verbindungsbauteils (14) erkennt, dass das Verbindungsbauteil (14) in seiner zweiten Stellung ist, und dass der Positionssensor (19) des Steuerelements (11) von seiner zweiten Stellung in seine erste Stellung übergeht, das Steuergerät (20) konfiguriert ist, das Anhalten oder das Verringern des Ablesens der Druckmessung des Drucksensors (21) steuert.

7. Vorrichtung nach einem der Ansprüche 1 bis 6, **dadurch gekennzeichnet, dass** der zweite Hahn (5) ein Leseelement (23) eines Funketiketts wie eine Kommunikationsantenne gemäß der Nahfeld-Kommunikationstechnologie "NFC" enthält.

8. Vorrichtung nach Anspruch 7, **dadurch gekennzeichnet, dass**, wenn der Positionssensor (18) des Verbindungsbauteils (14) einen Übergang des Verbindungsbauteils (14) von seiner ersten Stellung in seine zweite Stellung erkennt und auf diese Erkennung eine Erkennung des Übergangs des Steuerelements (11) von seiner ersten Stellung in seine zweite Stellung durch den Positionssensor (19) des Steuerelements (11) folgt, das Steuergerät (20) konfiguriert ist, das Leseelement (23) eines Funketiketts zu aktivieren und das empfangene Signal zu verarbeiten.

9. Vorrichtung nach Anspruch 5 oder 6, **dadurch gekennzeichnet, dass**, wenn der Positionssensor (18) des Verbindungsbauteils (14) erkennt, dass das Verbindungsbauteil (14) in seiner ersten Stellung ist und gleichzeitig der Drucksensor (21) einen höheren Druck als eine Schwelle misst oder ein Druckmesssignal liefert, das Steuergerät (20) konfiguriert ist, ein optisches und/oder akustisches Warnsignal und/oder auf elektromagnetischem Weg zu erzeugen.

10. Vorrichtung nach einem der Ansprüche 1 bis 9, **dadurch gekennzeichnet, dass** das Verbindungsbauteil (14) ein Verriegelungs-/Entriegelungselement (14) der mechanischen Verbindung der Befestigungselemente (6, 7) des Schnellverbindungssystems enthält oder daraus besteht, insbesondere eine translationsbewegliche Muffe.

11. Speichereinheit(en) eines unter Druck stehenden Fluids, die eine Vorrichtung gemäß einem der Ansprüche 1 bis 10 enthält(enthalten).

## Claims

1. Device for supplying pressurized fluid, in particular pressurized gas, comprising a first valve (3) accommodating an internal fluid circuit (13), the device (1) having a second valve (5) comprising an internal circuit (15), the second valve (5) forming a separate physical entity from the first valve (3), the first valve (3) and the second valve (5) comprising respective coupling members (6, 7) that form a quick-connection system for removably connecting the second valve (5) to the first valve (3), the internal circuits (13, 15) comprising a set of one or more control valves (4, 9) for allowing or preventing the flow of the fluid towards an outlet (25) of the device when the second valve (5) is coupled to the first valve (3) via the quick-connection system, the device (1) comprising at least one manually actuable mobile control member (11) for controlling the set of one or more control valves, the control member (11) being able to move between a first, rest position, in which the flow of fluid towards the outlet (25) is prevented, and a second, active position, in which the flow of fluid towards the outlet (25) is allowed, the quick-connection system comprising a connection piece (14) for connecting the second valve (5) to the first valve (3), the connection piece (14) being able to move between a first position, in which the quick connection between the second valve (5) and the first valve (3) has not been established, and a second position, in which the quick connection between the second valve (5) and the first valve (3) has been established, the second valve comprising at least one electrical member (16, 17) and in particular an electronic controller (20) and a battery (17) for supplying power to the at least one electrical member (16, 17), and a sensor (18) for sensing the position of the connection piece (14), said sensor (18) being connected to the controller (20), the at least one electrical member (16, 17) being able to switch between two distinct given operating states, the controller (20) being configured so as to switch the at least one electrical member (16, 17) between the two operating states, the device being **characterized in that** it includes a sensor (19) for sensing the position of the control member (11), said sensor (19) being connected to the controller (20), the controller (20) being configured so as to switch the at least one electrical member (16, 17) depending on the combination of the measurements from the sensor (18) for sensing the position of the connection piece (14) and from the sensor (19) for sensing the position of the control member (11) and **in that**, in its first position, the connection piece (14) blocks the control member (11) in its first, rest position so as to prevent it from moving towards its second, active position, and **in that**, in its second position, the connection piece (14) does not block the control member (11) in its first, rest position so as to allow it to move towards its second, active position, and **in that**, when the sensor (18) for sensing the position of the connection piece (14) detects that the connection piece (14) is in its first position and, at the same time, the sensor (19) for sensing the position of the control member (11) is in its second position, the controller (20) is configured so as to generate a visual and/or audio and/or electromagnetic warning signal.

2. Device according to Claim 1, **characterized in that** the at least one electrical member (16, 17) is able to switch between two operating states having different levels of electrical consumption, in particular between an active state and a standby state.

3. Device according to Claim 1 or 2, **characterized in that** the at least one electrical member (16, 17) comprises a wireless data transmission member (16) able to switch between a state of emitting a signal and a state of not emitting a signal and/or between distinct states of emitting signals at different respective frequencies.

4. Device according to Claim 3, **characterized in that**, when the sensor (18) for sensing the position of the connection piece (14) detects that the connection piece (14) is in its second position and the sensor (19) for sensing the position of the control member (11) changes from its second position to its first position, the controller (20) is configured so as to perform at least one of: command the transmission member (16) to remotely send a signal representative of the change in position of the control member (11), reduce the frequency of the remote sending of signals by the transmission member (16) .

5. Device according to any one of Claims 1 to 4, **characterized in that** the second valve (5) comprises a pressure sensor (21) in the circuit (15), said pressure sensor (21) generating an electrical measurement signal and being connected to the controller (20).

6. Device according to Claim 5 in combination with Claim 4, **characterized in that**, when the sensor (18) for sensing the position of the connection piece (14) detects that the connection piece (14) is in its second position and the sensor (19) for sensing the position of the control member (11) changes from its second position to its first position, the controller (20) is configured so as to command the stoppage or the reduction of the reading of the pressure measurement from the pressure sensor (21) .

7. Device according to any one of Claims 1 to 6, **characterized in that** the second valve (5) comprises a member (23) for reading a radio tag, such as a near-field communication "NFC" communication antenna.

8. Device according to Claim 7, **characterized in that**, when the sensor (18) for sensing the position of the connection piece (14) detects a change of the connection piece (14) from its first position to its second position and this detection is followed by a detection, by the sensor (19) for sensing the position of the control member (11), of the control member (11) changing from its first position to its second position, the controller (20) is configured so as to activate the member (23) for reading a radio tag and to process the received signal.

9. Device according to either one of Claims 5 and 6, **characterized in that**, when the sensor (18) for sensing the position of the connection piece (14) detects that the connection piece (14) is in its first position and, at the same time, the pressure sensor (21) measures a pressure greater than a threshold or delivers a pressure measurement signal, the controller (20) is configured so as to generate a visual and/or audio and/or electromagnetic warning signal.

10. Device according to any one of Claims 1 to 9, **characterized in that** the connection piece (14) comprises or consists of a member (14) for locking/unlocking the mechanical link of the coupling members (6, 7) of the quick-connection system, in particular a sleeve able to move in translation.

11. Assembly for storing pressurized fluid, comprising a device according to any one of Claims 1 to 10.
